# FASCICULE DE BREVET EUROPEEN

(11) **EP 2 030 539 B1**
(45) Date de publication et mention de la délivrance du brevet: **04.08.2010**
(21) Numéro de dépôt: 08356120.9
(22) Date de dépôt: 27.08.2008
(51) Int. Cl.: A47J 31/42, A47J 42/44

(54) **Procédé pour compter le nombre de tours d'une meule d'un moulin à café et appareil comprenant un tel moulin**
Verfahren zum Zählen der Umdrehungszahlen des Mahlwerks einer Kaffeemühle und Gerät, das eine solche Mühle umfasst
Method for counting the number of turns of the grinding wheel of a coffee grinder and device comprising such a grinder

(30) Priorité: 29.08.2007 FR 0706052
(43) Date de publication de la demande: 04.03.2009
(73) Titulaire: SEB S.A., 69130 Ecully Cedex (FR)
(72) Inventeur: Beule, Mickaël, 14499 Crouay (FR); LeBuffe, Gilles, 50890 Conde sur Vire (FR)
(74) Mandataire: Kiehl, Hubert

(56) Documents cités:
- EP-A- 1 493 368
- FR-A- 2 648 035

## Description

La présente invention se rapporte au domaine des appareils pour la préparation d'infusion de café, plus particulièrement des appareils du type espresso comprenant un moulin à grains de café.

Elle vise plus particulièrement un procédé pour compter le nombre de tours d'une meule d'un moulin à café entraînée en rotation par un moteur électrique.

Dans les appareils du type précité, la quantité de poudre de café distribuée par la meule est fonction du nombre de tours effectués par cette dernière. Il est donc important de déterminer précisément le nombre de tours effectués par la meule pour distribuer une dose prédéterminée de café moulu au cours d'un cycle de production de boisson.

On connaît du document FR 2648035 un appareil comportant un moulin à café entraîné par un moteur électrique. Le nombre de tours effectués par la meule est déterminé au moyen d'un capteur et l'arrêt du moteur est commandé quand a été atteint un nombre prédéterminé de tours. Le capteur, par exemple à effet Hall, détecte le passage d'un repère, par exemple magnétique, placé sur une roue dentée d'un réducteur placé entre le moteur et le moulin.

Ce procédé pour compter le nombre de tours connu présente l'inconvénient de nécessiter un capteur équipé de ses fils de câblage vers un circuit de mesure et un repère fixé sur une roue dentée du réducteur. Cette construction entraîne un coût de fabrication et de montage important et peut induire des problèmes de fiabilité liés à un désalignement du capteur par rapport au repère ou à des coupures dans les fils de câblage.

Le but de la présente invention est de proposer un appareil pour la préparation d'infusion de café comprenant un procédé pour compter le nombre de tours de la meule d'un moulin à café qui permette de s'affranchir de l'utilisation d'un capteur et qui, par conséquent, soit simple et très économique à mettre en oeuvre.

Un autre but de l'invention est de proposer un appareil pour la préparation d'infusion de café comprenant un procédé pour compter le nombre de tours de la meule d'un moulin à café qui présente une grande fiabilité, sans l'utilisation de fils de câblage et de pièces mobiles.

A cet effet, l'invention concerne un procédé pour compter le nombre de tours d'une meule d'un moulin à café entraînée en rotation par un moteur électrique. Ce procédé se caractérise par le fait que :
- on mesure à intervalle de temps régulier Tᵢ au moins un paramètre électrique Pᵢ du moteur variant proportionnellement à la vitesse dudit moteur ;
- on calcule la vitesse Vᵢ sur chaque intervalle de temps Tᵢ à partir dudit paramètre Pᵢ à partir d'une relation obtenue expérimentalement ;
- on calcule le nombre de tours Nᵢ effectué par la meule sur chaque intervalle de temps Tᵢ à partir de la vitesse Vᵢ déterminée.

Ce procédé permet de piloter la meule à partir de la mesure d'un paramètre électrique du moteur directement par un circuit de mesure très simple inclus dans un circuit de commande du moteur, sans nécessiter de pièces extérieures à ce circuit de commande.

Avantageusement, on arrête le moteur lorsque la somme des nombres de tours ΣNᵢ atteint un seuil de nombre de tours prédéterminé.

Selon un mode particulier de réalisation de l'invention, le moteur électrique est un moteur alimenté par un courant alternatif et par une tension U et ledit paramètre Pᵢ dudit moteur est l'intensité absorbée.

La mesure de l'intensité dans ce mode de réalisation peut être réalisée simplement via une résistance shunt et un microcontrôleur déjà nécessaire dans le circuit de commande, donc en ajoutant peu de pièces à ce circuit.

Avantageusement, on mesure la tension U d'alimentation du moteur et on apporte une correction dans le calcul de la vitesse en fonction de ladite tension.

Cette disposition permet, avec l'utilisation d'un moteur alimenté par un courant alternatif, de s'affranchir de la tension du secteur et d'obtenir une bonne précision dans le comptage du nombre de tours.

Selon un autre mode de réalisation de l'invention, le moteur électrique est un moteur alimenté par un courant continu et le paramètre électrique du moteur variant proportionnellement à la vitesse dudit moteur est la force contre électromotrice.

Avantageusement, l'intervalle de temps Tᵢ est compris entre 10 millisecondes et 1 dixième de secondes, de préférence 20 millisecondes.

Cet échantillonnage de 20 millisecondes est facile à réaliser car il correspond à une alternance du secteur à la fréquence du réseau de 50 Hertz. Dans le cas où la fréquence du réseau est de 60 Hertz, l'intervalle de temps Tᵢ est de préférence de 16,666 millisecondes.

Selon une autre caractéristique de l'invention, le moteur est arrêté si le paramètre Pᵢ mesuré est supérieur à un seuil prédéterminé sur une période donnée.

Une telle caractéristique permet de détecter que le moulin à café est bloqué et ainsi d'arrêter le moteur avant qu'il ne soit endommagé.

Selon une autre caractéristique de l'invention, le moteur est arrêté si le paramètre Pᵢ mesuré est inférieur à un seuil prédéterminé.

Une telle caractéristique permet de détecter que le moulin à café est vide et d'interrompre la distribution d'une quantité de café erronée en arrêtant le moteur.

Par ailleurs, l'invention se rapporte également à un appareil pour la préparation d'infusion de café comprenant un moulin à café comportant une meule dont le nombre de tours est compté par le procédé objet de l'invention.

Un tel appareil comprenant un moulin à café comportant une meule dont le nombre de tours est compté par le procédé objet de l'invention est apte à être mis en oeuvre de façon simple et économique et présente une grande fiabilité.

Avantageusement, l'appareil comporte une mémoire où est stockée une relation obtenue expérimentalement entre le paramètre Pᵢ et la vitesse Vᵢ.

Cette disposition permet d'adapter le procédé de comptage de tours aux caractéristiques du moteur pour obtenir une bonne précision.

L'invention sera mieux comprise à l'étude des modes de réalisation pris à titre nullement limitatif et illustrés dans les figures annexées dans lesquelles :
- La figure 1 est une vue schématique du circuit de commande d'un moteur alimenté par un courant alternatif entraînant la meule d'un moulin à café selon un mode particulier de réalisation de l'invention.
- La figure 2 illustre un exemple de table de correspondance de la quantité de courant Iᵢ mesurée et de la vitesse brute Vᵢb d'un moteur alimenté par un courant alternatif entraînant la meule d'un moulin à café.
- La figure 3 illustre un exemple d'algorithme de fonctionnement du procédé pour compter le nombre de tours de la meule d'un moulin à café lorsque cette dernière est entraînée par un moteur alimenté par un courant alternatif.
- La figure 4 est une vue schématique du circuit de commande d'un moteur alimenté par un courant continu entraînant la meule d'un moulin à café selon un autre mode particulier de réalisation de l'invention.
- La figure 5 illustre un exemple de relation entre la force contre électromotrice FCEMᵢ mesurée et de la vitesse Vᵢ d'un moteur alimenté par un courant continu entraînant la meule d'un moulin à café.
- La figure 6 illustre un exemple d'algorithme de fonctionnement du procédé pour compter le nombre de tours de la meule d'un moulin à café lorsque cette dernière est entraînée par un moteur alimenté par un courant continu.

Seuls les éléments nécessaires à la compréhension de l'invention ont été représentés.

L'invention se rapporte à un appareil pour la préparation de café comprenant un moulin à café. Le moulin comporte une meule entraînée par un moteur via un réducteur dont le rapport de réduction est par exemple de quarante.

Selon un premier mode particulier de réalisation de l'invention, le moteur est alimenté par un courant alternatif.

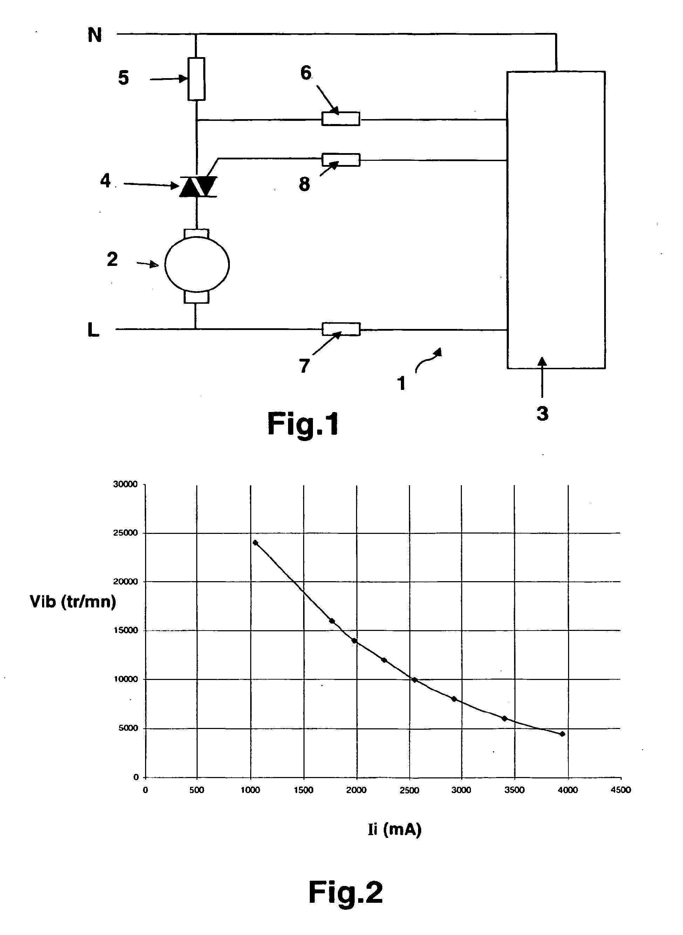

La figure 1 représente schématiquement un circuit de commande 1 d'un moteur 2 alimenté par un courant alternatif entraînant la meule d'un moulin à café. Ledit circuit de commande 1 comporte un élément de pilotage 4 du moteur 2 et un élément 5 donnant l'image du courant traversant le moteur 2. De manière avantageuse, l'élément de pilotage du moteur est un triac 4 et l'élément donnant l'image du courant est un shunt 5. Le triac 4 et le shunt 5 sont reliés en série avec le moteur 2 et sont soumis via deux bornes L et N à une tension d'alimentation alternative lorsque l'appareil est relié au réseau électrique.

Sur le circuit de commande 1 est implanté un microcontrôleur 3 contenant un programme permettant de piloter les différentes fonctions de l'appareil. Le microcontrôleur 3 reçoit sur des entrées et émet sur des sorties différentes informations. Sur une entrée 6, le microcontrôleur 3 reçoit à intervalles réguliers, via le shunt 5, une valeur instantanée du courant 1 traversant le moteur. Sur une autre entrée 7, le microcontrôleur 3 reçoit l'image de la tension d'alimentation U ; ce qui permet audit microcontrôleur 3 de mesurer la valeur de la tension et de définir à quel instant la tension est égale à zéro ; instant appelé zéro secteur. A partir d'une sortie 8, le microcontrôleur 3 commande le triac 4.

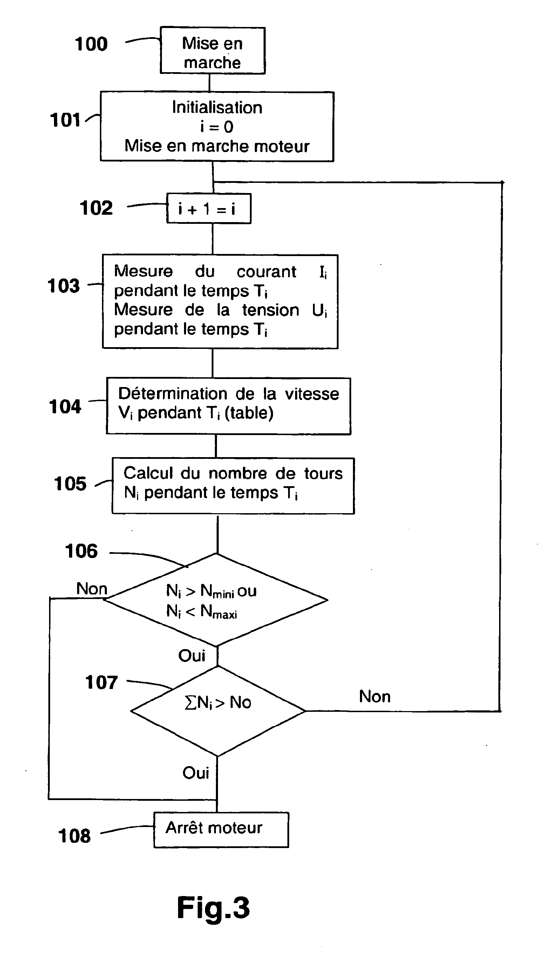

La figure 3 représente la succession d'étapes permettant à un moulin à café dont la meule est entraînée par un moteur alimenté par un courant alternatif de distribuer une dose de café moulu ; c'est-à-dire jusqu'à ce que la meule du moulin ait réalisé un nombre de tours prédéterminé.

La première étape 100 représentée sur l'organigramme de la figure 3 consiste à mettre en marche le moulin à café. En pratique, pour accomplir cette étape, l'utilisateur manoeuvre un organe de commande du type interrupteur qui autorise l'alimentation électrique du circuit de commande 1 après s'être assuré que le réservoir du moulin contenait suffisamment de café en grains.

La deuxième étape 101 est une étape d'initialisation du programme du microcontrôleur 3. Cette étape comprend également la remise à zéro d'un compteur de temps inclus dans le microcontrôleur 3. L'unité de temps Tᵢ de ce compteur est de préférence 20 millisecondes ce qui correspond à une alternance du secteur à la fréquence du réseau de 50 Hz. Ce compteur est réalisé par le microcontrôleur 3 à l'aide de l'entrée 7 recevant l'image de la tension d'alimentation. Le zéro secteur est l'instant où démarre chaque nouvelle unité de temps Tᵢ ou i est un indice qui s'incrémente au démarrage de chaque nouvelle unité de temps. Au cours de cette étape, le microcontrôleur 3 met en marche le moteur 2 en commandant le triac 4 au moyen de sa sortie 8.

L'étape 102 correspond à l'incrémentation du compteur par le microcontrôleur 3 via l'indice i, ce qui permet le cadencement de la base de temps et au cycle de mouture du moulin d'avancer unité de temps par unité de temps.

L'étape 103 est une étape de mesure de deux paramètres pendant l'unité de temps Tᵢ : la quantité de courant Iᵢ traversant le moteur et la tension Uᵢ d'alimentation secteur.

Pour réaliser la mesure de la quantité de courant Iᵢ traversant le moteur 2 pendant l'unité de temps Tᵢ, le microcontrôleur 3 découpe cette unité de temps en échantillons d'une durée suffisamment courte pour obtenir une bonne précision de la mesure, par exemple 200 microsecondes. Sur chaque échantillon, le microcontrôleur 3 fait l'acquisition de la valeur de l'intensité I au moyen de son entrée 6 via le shunt 5 et réalise la somme de ces valeurs de 1 pour obtenir la quantité de courant Iᵢ traversant le moteur 2 pendant l'unité de temps Tᵢ.

Le microcontrôleur 3 réalise simultanément la mesure de la tension Uᵢ traversant le moteur 2 pendant l'unité de temps Tᵢ au moyen de son entrée 7 recevant l'image de la tension d'alimentation.

Lorsque le temps Tᵢ est écoulé, le microcontrôleur 3 exécute l'étape 104 qui consiste à déterminer la vitesse Vᵢ du moteur 2 pendant l'unité de temps Tᵢ.

Pour cela, le microcontrôleur 3 convertit la quantité de courant Iᵢ mesurée en une vitesse brute Vᵢb au moyen d'une table de correspondance définie expérimentalement en fonction des caractéristiques du moteur 2 (fig. 2); cette table étant mémorisée dans le microcontrôleur 3.

Enfin, pour obtenir la vitesse Vᵢ, exprimée en nombre de tours par seconde, en fonction de la mesure de la tension Uᵢ, le microcontrôleur 3 va corriger la vitesse brute Vᵢb par un coefficient de correction Cᵢ : Vᵢ = Vᵢb x Cᵢ. La loi de variation du coefficient Cᵢ en fonction de la tension Uᵢ a été déterminée expérimentalement et a la forme d'une droite d'équation Cᵢ = 0,0076 Uᵢ - 0,7202. Cette loi de variation est mémorisée dans le microcontrôleur 3.

L'étape 105 est une étape de calcul du nombre de tours Nᵢ réalisé par le moteur 2 pendant le temps Tᵢ. Le microcontrôleur 3 effectue ce calcul donné par la relation Nᵢ = Vᵢ / Tᵢ.

L'étape 106 est une étape de test permettant de vérifier deux cas de fonctionnement anormal du moulin à café.

Le premier cas correspond au moteur 2 bloqué, par exemple par une pierre dans les meules. La détection du moteur 2 bloqué permet de protéger l'ensemble mécanique entraîné par le moteur 2 et cette détection doit être rapide et peu sensible aux perturbations électriques.

Pour réaliser la détection moteur 2 bloqué, le microcontrôleur 3 compare les cinq dernières valeurs de Nᵢ à une valeur mémorisée Nₘᵢₙᵢ. Si chacune de ces valeurs est inférieure à Nₘᵢₙᵢ, le moteur 2 est considéré comme bloqué, alors le microcontrôleur 3 commande l'arrêt du moteur 2. Si au moins une de ces cinq valeurs est supérieure à Nₘᵢₙᵢ, le microcontrôleur 3 poursuit le cycle et passe à la deuxième partie du test de l'étape 106.

Une telle méthode permet de ne pas prendre en compte une perturbation électrique dont la durée d'apparition est plus courte qu'une période fixée à cinq unités de temps Tᵢ.

Le deuxième cas de fonctionnement anormal du moulin détecté à l'étape 106 correspond à un manque de café dans le moulin.

De la même manière que pour la détection du moteur bloqué, le microcontrôleur 3 compare les cinq dernières valeurs de Nᵢ à une valeur mémorisée Nₘₐₓᵢ. Si chacune de ces valeurs est supérieure à Nₘₐₓᵢ, le moulin à café est considéré comme vide, alors le microcontrôleur 3 commande l'arrêt du moteur 2. Si au moins une de ces cinq valeurs est inférieure à Nₘₐₓᵢ, le microcontrôleur 3 poursuit le cycle et passe à l'étape 107.

La valeur mémorisée Nₘₐₓᵢ peut être une valeur identique pour tous les appareils fabriqués. De manière avantageuse, la valeur mémorisée Nₘₐₓᵢ peut être personnalisable pour chaque appareil en fonction de tests de fonctionnement réalisés sur la ligne de fabrication et ladite valeur mémorisée Nₘₐₓᵢ peut être également évolutive au cours de la vie de l'appareil en fonction du nombre de cycles de mouture réalisés.
L'étape 107 est une étape de test permettant de détecter la fin du cycle de distribution d'une dose de café. Le microcontrôleur 3 comporte un compteur qui permet de faire la somme des nombres de tours Nᵢ et une valeur mémorisée No correspondant au nombre de tours du moteur nécessaire pour distribuer une dose de café.

Le microcontrôleur compare la somme des nombres de tours Nᵢ et la valeur mémorisée No : Si Σ Nᵢ <No, le microcontrôleur repasse à l'étape 102. si Σ Nᵢ > No, le nombre de tours du moteur 2 nécessaire pour distribuer une dose de café est atteint, le microcontrôleur 3 passe à l'étape 108 en commandant l'arrêt du moteur 2 au moyen de sa sortie 8.

Selon un deuxième mode de réalisation de l'invention, le moteur est alimenté par un courant continu.

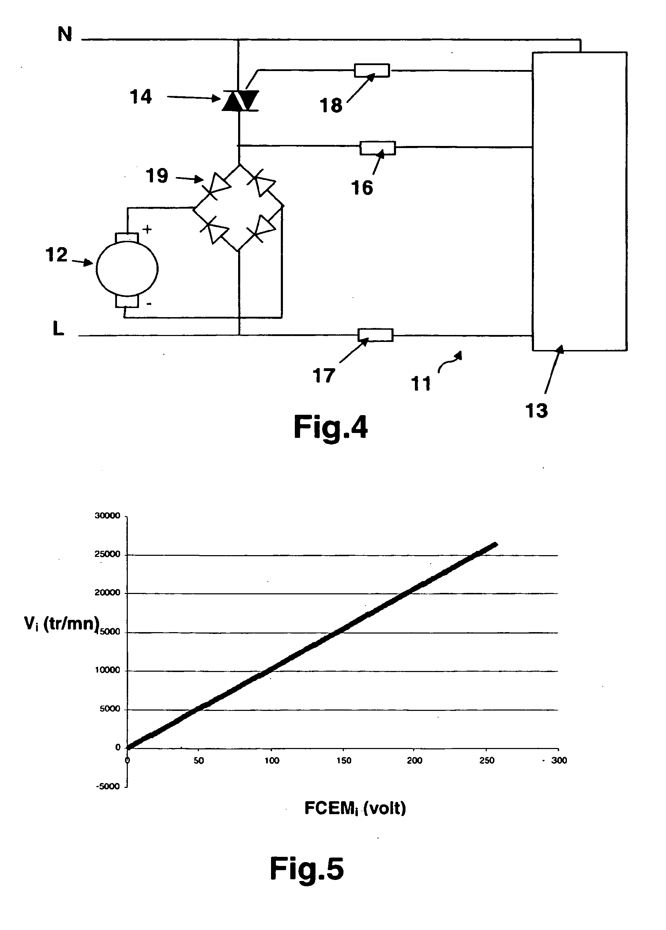

La figure 4 représente schématiquement un circuit de commande 11 d'un moteur 12 alimenté par un courant continu entraînant la meule d'un moulin à café inclus dans un appareil pour la préparation d'infusion de café. Ledit circuit de commande 11 comporte un pont de diodes 19 et un élément de pilotage 14 du moteur 12. Le circuit de commande 11 est soumis via deux bornes L et N à une tension d'alimentation alternative lorsque l'appareil est relié au réseau électrique. Le pont de diodes 19 transforme la tension alternative en une tension continue aux bornes du moteur 12. De manière avantageuse, l'élément de pilotage du moteur est un triac 14.

Sur le circuit de commande 11 est implanté un microcontrôleur 13 contenant un programme permettant de piloter les différentes fonctions de l'appareil. Le microcontrôleur 13 reçoit sur des entrées et émet sur des sorties différentes informations. Sur une entrée 16, le microcontrôleur reçoit à intervalles réguliers une valeur instantanée de la force contre électromotrice FCEM du moteur 12. Sur une autre entrée 17, le microcontrôleur reçoit l'image de la tension d'alimentation U; ce qui permet audit microcontrôleur 13 de mesurer la valeur de la tension et de définir à quel instant la tension est égale à zéro ; instant appelé zéro secteur. A partir d'une sortie 18, le microcontrôleur commande le triac 14.

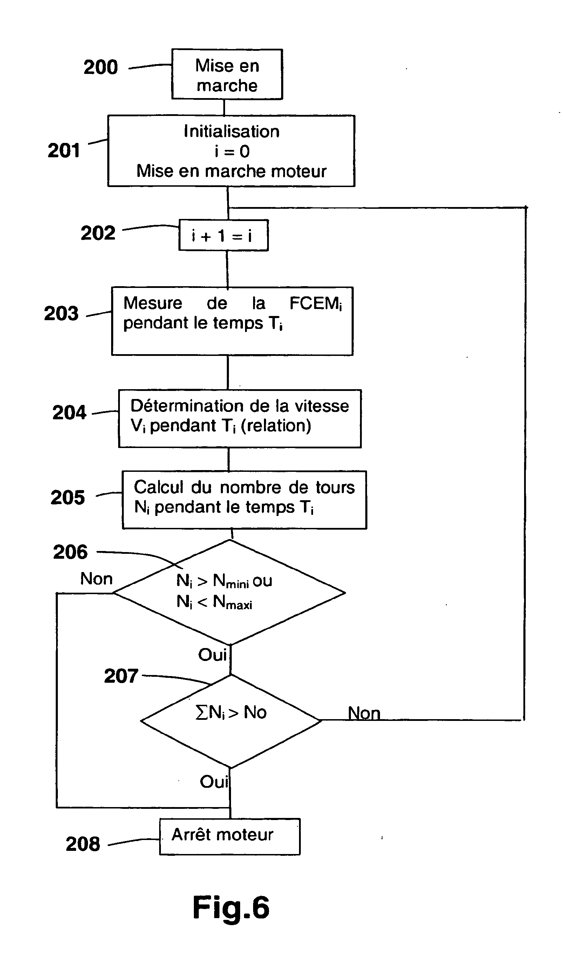

La figure 6 représente la succession d'étapes permettant à un moulin à café dont la meule est entraînée par un moteur alimenté par un courant continu de distribuer une dose de café moulu ; c'est-à-dire jusqu'à ce que la meule du moulin ait réalisé un nombre de tours prédéterminé.

Les étapes 200 (mise en marche de l'appareil), 201 (initialisation et mise en marche moteur) et 202 (incrémentation du compteur) sont identiques aux étapes 100, 101, 102 décrites précédemment.

L'étape 203 est une étape de mesure de la force contre électromotrice FCEMᵢ pendant l'unité de temps Tᵢ.

Le microcontrôleur 13 réalise cette mesure pendant une phase où le moteur 12 n'est pas alimenté, juste après le zéro secteur détecté au moyen de son entrée 17 et avant la commande du triac 14 piloté par la sortie 18. Le microcontrôleur 13 mesure la force contre électromotrice FCEMᵢ au moyen de son entrée 16.

Lorsque le temps Tᵢ est écoulé, le microcontrôleur 13 exécute l'étape 204 qui consiste à déterminer la vitesse Vᵢ du moteur 12 pendant l'unité de temps Tᵢ.

Pour cela, le microcontrôleur 13 convertit la force contre électromotrice FCEMᵢ mesurée en une vitesse Vᵢ au moyen d'une relation linéaire définie expérimentalement en fonction des caractéristiques du moteur 12 (fig. 5); cette relation étant mémorisée dans le microcontrôleur 13. Dans l'exemple de la figure 5, la relation à la forme d'une équation : V = 103,57 FCEM - 113,87.

Les étapes suivantes de 205 à 208 sont identiques aux étapes 105 à 108 décrites précédemment.

Bien entendu, l'invention n'est nullement limitée aux modes de réalisation décrits et illustrés qui n'ont été donnés qu'à titre d'exemple. Des modifications restent possibles, notamment du point de vue de la constitution des divers éléments ou par substitution d'équivalents techniques, sans sortir pour autant du domaine de protection de l'invention.

## Revendications

1. Procédé pour compter le nombre de tours d'une meule d'un moulin à café entraînée en rotation par un moteur électrique, **caractérisé en ce que** :
- on mesure à intervalle de temps régulier Tᵢ au moins un paramètre électrique Pᵢ du moteur variant proportionnellement à la vitesse dudit moteur;
- on calcule la vitesse Vᵢ sur chaque intervalle de temps Tᵢ à partir dudit paramètre Pᵢ à partir d'une relation obtenue expérimentalement ;
- on calcule le nombre de tours Nᵢ effectué par la meule sur chaque intervalle de temps Tᵢ à partir de la vitesse Vi déterminée.

2. Procédé selon la revendication 1, **caractérisé en ce qu'**on arrête le moteur lorsque la somme des nombres de tours ∑Nᵢ atteint un seuil de nombre de tours prédéterminé.

3. Procédé selon l'une quelconque des revendications 1 à 2, **caractérisé en ce que** le moteur électrique est un moteur alimenté par un courant alternatif et par une tension U et **en ce que** ledit paramètre Pᵢ dudit moteur est l'intensité absorbée.

4. Procédé selon l'une quelconque des revendications 1 à 3, **caractérisé en ce que** l'on mesure la tension U d'alimentation du moteur et **en ce que** l'on apporte une correction dans le calcul de la vitesse en fonction de ladite tension.

5. Procédé selon l'une quelconque des revendications 1 à 2, **caractérisé en ce que** le moteur électrique est un moteur alimenté par un courant continu et **en ce que** le paramètre électrique du moteur variant proportionnellement à la vitesse dudit moteur est la force contre électromotrice.

6. Procédé selon l'une quelconque des revendications 1 à 5, **caractérisé en ce que** l'intervalle de temps Tᵢ est compris entre 10 millisecondes et 1 dixième de secondes, de préférence 20 millisecondes.

7. Procédé selon l'une quelconque des revendications 1 à 6, **caractérisé en ce que** le moteur est arrêté si le paramètre Pᵢ mesuré est supérieur à un seuil prédéterminé sur une période donnée.

8. Procédé selon l'une quelconque des revendications 1 à 7, **caractérisé en ce** le moteur est arrêté si le paramètre Pᵢ mesuré est inférieur à un seuil prédéterminé.

9. Appareil pour la préparation d'infusion de café comprenant un moulin à café comportant une meule dont le nombre de tours est compté par le procédé selon l'une quelconque des revendications 1 à 8.

10. Appareil selon la revendication 9, **caractérisé en ce qu'**il comporte une mémoire où est stockée une relation obtenue expérimentalement entre le paramètre Pᵢ et la vitesse Vᵢ.

## Claims

1. Method for counting the number of revolutions of a burr of a coffee mill driven in rotation by an electric motor, **characterized in that**:
- at least one electrical parameter Pᵢ of the motor that varies in proportion to the speed of said motor is measured in a regular time interval Tᵢ;
- the speed Vᵢ in each time interval Tᵢ is calculated from said parameter Pᵢ based on an experimentally obtained relation;
- the number of revolutions Nᵢ made by the burr in each time interval Tᵢ is calculated from the speed Vᵢ determined.

2. Method according to claim 1, **characterized in that** the motor is shut off when the sum of the numbers of revolutions ∑Nᵢ reaches a predetermined number-of-revolutions threshold.

3. Method according to either of claims 1 and 2, **characterized in that** the electric motor is a motor that is powered by an alternating current and by a voltage U, and **in that** said parameter Pᵢ of said motor is the absorbed intensity.

4. Method according to any of claims 1 through 3, **characterized in that** the supply voltage U of the motor is measured and **in that** a correction is made to the speed calculation as a function of said voltage.

5. Method according to either of claims 1 and 2, **characterized in that** the electric motor is a direct current-powered motor and **in that** the electrical parameter of the motor that varies in proportion to the speed of said motor is the counter-electromotive force.

6. Method according to any of claims 1 through 5, **characterized in that** the time interval Tᵢ is between 10 milliseconds and 1 tenth of a second, preferably 20 milliseconds.

7. Method according to any of claims 1 through 6, **characterized in that** the motor is shut off if the parameter Pᵢ measured is above a predetermined threshold in a given period.

8. Method according to any of claims 1 through 7, **characterized in that** the motor is shut off if the parameter Pᵢ measured is below a predetermined threshold.

9. Appliance for the preparation of coffee infusions comprising a coffee mill that includes a burr whose number of revolutions is counted by means of the method according to any of claims 1 through 8.

10. Appliance according to claim 9, **characterized in that** it includes a memory in which an experimentally obtained relation between the parameter Pᵢ and the speed Vᵢ is stored.

## Patentansprüche

1. Verfahren zum Zählen der Anzahl der Umdrehungen einer Mahlscheibe einer Kaffeemühle, die von einem Elektromotor in Drehung versetzt wird, **dadurch gekennzeichnet, dass**:
- bei regelmäßigem Zeitintervall Tᵢ mindestens ein elektrischer Parameter Pᵢ des Motors, der proportional zur Geschwindigkeit des Motors variiert, gemessen wird;
- die Geschwindigkeit Vᵢ für jedes Zeitintervall Tᵢ ausgehend vom Parameter Pᵢ ausgehend von einer experimentell erhaltenen Relation berechnet wird;
- die Anzahl der Umdrehungen Nᵢ, die von der Mahlscheibe in jedem Zeitintervall Tᵢ ausgeführt wird, ausgehend von der ermittelten Geschwindigkeit Vᵢ berechnet wird.

2. Verfahren nach Anspruch 1, **dadurch gekennzeichnet, dass** der Motor angehalten wird, sobald die Summe der Anzahl der Umdrehungen ∑Nᵢ einen vorausbestimmten Grenzwert der Anzahl der Umdrehungen erreicht.

3. Verfahren nach einem der Ansprüche 1 bis 2, **dadurch gekennzeichnet, dass** der Elektromotor ein Motor ist, der mit Wechselstrom und mit einer Spannung U versorgt wird, und dadurch, dass der Parameter Pᵢ des Motors die aufgenommene Stromstärke ist.

4. Verfahren nach einem der Ansprüche 1 bis 3, **dadurch gekennzeichnet, dass** die Versorgungsspannung U des Motors gemessen wird, und dadurch, dass die Berechnung der Geschwindigkeit in Abhängigkeit von der Spannung korrigiert wird.

5. Verfahren nach einem der Ansprüche 1 bis 2, **dadurch gekennzeichnet, dass** der Elektromotor ein Motor ist, der mit Gleichstrom versorgt wird, und dadurch, dass der elektrische Parameter des Motors, der proportional zur Geschwindigkeit des Motors variiert, die gegenelektromotorische Kraft ist.

6. Verfahren nach einem der Ansprüche 1 bis 5, **dadurch gekennzeichnet, dass** das Zeitintervall Tᵢ zwischen 10 Millisekunden und 1 Zehntelsekunde beträgt, vorzugsweise 20 Millisekunden.

7. Verfahren nach einem der Ansprüche 1 bis 6, **dadurch gekennzeichnet, dass** der Motor angehalten wird, wenn der gemessene Parameter Pᵢ während einer gegebenen Zeitdauer über einem vorausbestimmten Grenzwert liegt.

8. Verfahren nach einem der Ansprüche 1 bis 7, **dadurch gekennzeichnet, dass** der Motor angehalten wird, wenn der gemessene Parameter Pᵢ unter einem vorausbestimmten Grenzwert liegt.

9. Gerät zur Bereitung einer Kaffeeaufbrühung, umfassend eine Kaffeemühle mit einer Mahlscheibe, deren Anzahl der Umdrehungen gemäß dem Verfahren nach einem der Ansprüche 1 bis 8 gezählt wird.

10. Gerät nach Anspruch 9, **dadurch gekennzeichnet, dass** es einen Speicher umfasst, in dem eine experimentell erhaltene Relation zwischen dem Parameter Pᵢ und der Geschwindigkeit Vᵢ gespeichert ist.
